(19) Europäisches Patentamt
European Patent Office
Office européen des brevets

(11) **EP 4 749 862 A1**

(12) **EUROPEAN PATENT APPLICATION**

(43) Date of publication:
**27.05.2026 Bulletin 2026/22**

(21) Application number: **24214682.7**

(22) Date of filing: **22.11.2024**

(51) International Patent Classification (IPC):
*H02H 9/08* (2006.01)      *G01R 31/08* (2020.01)

(52) Cooperative Patent Classification (CPC):
**H02H 9/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventors:
• **Leminen, Janne
33720 Tampere (FI)**
• **Siermala, Saku
65320 Vaasa (FI)**
• **Altonen, Janne
33720 Tampere (FI)**

(74) Representative: **Kolster Oy Ab
Salmisaarenaukio 1
P.O. Box 204
00181 Helsinki (FI)**

(54) **METHOD AND APPARATUS FOR CONTROLLING ARC SUPPRESSION DEVICE**

(57)     A method and apparatus for controlling an arc suppression device of a three-phase electric network, the arc suppression device having an adjustable admittance connected between a neutral point of the three-phase electric network and earth, the apparatus being configured to determine (110) a resonant frequency of a zero-sequence system of the three-phase electric network, determine (140) at least two frequencies for a current injection on the basis of the determined resonant frequency, perform (150) a current injection into the neutral point of the three-phase electric network by using the determined at least two frequencies, determine (160) a value of at least one parameter related to the three-phase electric network on the basis of the current injection, and use the determined value of the at least one parameter for adjusting (180) the admittance of the arc suppression device.

Fig. 4

Initiate tuning sequence — 100

Frequency determination — 110

Frequency same as reference? — 120 → Yes → Parameters calculated after previous coil movement? — 130 → Yes → Tuning trigger — 230

No → Determination of optimal frequencies — 140

Parameters calculated after previous coil movement? → No → Determination of optimal frequencies

Injection of optimal frequencies — 150

Parameter calculation — 160

Network detuning is at user defined set value — 170 → Yes → Final coil position reached — 190

No → Move coil position — 180

Final coil position reached → Sufficient level of Uo? — 200 → Yes → Determine network asymmetry admittance — 210 → Update reference value(s) — 220 → Tuning trigger

Sufficient level of Uo? → No → Update reference value(s)

EP 4 749 862 A1

**Description**

TECHNICAL FIELD

The present invention relates to a method and an apparatus for controlling an arc suppression device.

BACKGROUND

An arc suppression device can be used for compensating a fault current caused by a single-phase-to-earth fault. An example of the arc suppression device is an Arc Suppression Coil, ASC, which is a passive inductive device that is connected between a neutral point of an electric system (e.g. network) and earth to limit the capacitive earth-fault current flowing, when a single-phase-to-earth fault occurs in the system. The ASC was originally developed by Waldemar Petersen and is therefore sometimes referred to as the Petersen Coil. This kind of system earthing method may be called as the resonant earthing. The resonant earthing is a commonly used earthing practice in medium voltage networks, for example, and it has been used in several countries for many decades with good operational experiences. An example of the ASC is disclosed in US 1537371. An electric network provided with one or more such arc suppression devices may be referred to as a compensated network.

The idea of the resonant earthing may be generally to match, either essentially completely or at least partially, an admittance of the arc suppression device(s) to the total phase-to-earth capacitance formed by the network conductors. In this case the magnitude of the earth-fault current at the fault location can be limited below the level of self-extinguishment, which can suppress transient earth faults without a feeder tripping, for example. Also, the touch and hazard voltages can be limited with the decreased fault current value, which also can limit the danger to public and property, and improve safety to personnel, for instance.

In order to set the admittance value of the arc suppression device(s) to match the total phase-to-earth capacitance of the network conductors, at least an inductance, provided by e.g. one or more adjustable coils, of the arc suppression device may be variable and a controller device (e.g. a coil controller) can be used. The purpose of such a controller device is to adjust, i.e. tune, the arc suppression device admittance to match, either essentially completely or at least partially, the total phase-to-earth capacitance value of the network. And if the phase-to-earth capacitance value of the network changes, the controller device may again adjust (tune) the admittance of the arc suppression device(s) to match the changed phase-to-earth capacitance value of the network. Such or tuning of the arc suppression device(s) may generally include injecting an alternating current signal into the neutral point of the network (zero-sequence current injection) which enables to determine one or more network parameters or a state of the network detuning based on which the arc suppression device(s) can be tuned or adjusted. An example of such solution is disclosed in DE 10307668 B3.

A possible problem related to such solutions utilizing the current injection for the tuning of the arc suppression device is that the level (amplitude) of sufficient injection current, and hence the power, required to enable the determination of the one or more network parameters or the state of the network detuning may be high.

BRIEF DESCRIPTION

An object of the present invention is thus to provide a method and an apparatus for implementing the method so as to overcome the above problem or at least to alleviate the above problem. The object of the invention is achieved by a method and an apparatus which are characterized by what is stated in the independent claims. The preferred embodiments of the invention are disclosed in the dependent claims.

The invention is based on the idea of determining a resonant frequency of a zero-sequence system of the three-phase electric network, determining at least two frequencies for a current injection on the basis of the determined resonant frequency and performing the current injection into the neutral point of the three-phase electric network by using the determined at least two frequencies.

An advantage of the solution of the invention is that the frequencies used in the current injection can be adjusted according to the prevailing network configuration and consequently the power required for the current injection can be reduced.

BRIEF DESCRIPTION OF THE DRAWINGS

In the following the invention will be described in greater detail by means of preferred embodiments with reference to the accompanying drawings, in which

Figure 1 is an example of a three-phase electric network illustrating an embodiment;
Figure 2 is an example of a three-phase electric network illustrating an embodiment;

Figure 3 illustrates a diagram according to an embodiment;
Figure 4 illustrates a flow diagram according to an embodiment;
Figure 5 illustrates a diagram according to an embodiment
Figure 6 illustrates a diagram according to an embodiment; and
Figure 7 illustrates a block diagram according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures.

Different embodiments and examples may be described below using single units, models, equipment and memory, for example, without restricting the embodiments/examples to such a solution. Concepts called cloud computing and/or virtualization may be used. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In possible cloud computing network devices, computing devices and/or storage devices may provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment in question.

The application of the various embodiments described herein is not limited to any specific system, but it can be used in connection with various three-phase electric networks with a compensated neutral, also known as resonant-earthed networks, where compensation of fault current is achieved by installing one or more arc suppression devices, such as Arc Suppression Coils (ASC), also known as Petersen coils or compensation coils, into neutral point(s) (star point, zero point) of the system. The electric network, in which the various embodiments may be implemented, can be an electric power transmission and/or distribution network or a portion or a component of a larger network, for example, and may comprise several electric lines and/or sections. The electric network may have a radial configuration supplied from one point thereof or a loop configuration comprising one or more loops and supplied from two or more points, or a combination of such configurations, for instance. Moreover, the use of the various embodiments is not limited to systems employing 50 Hz or 60 Hz fundamental frequencies or to any specific voltage level. Also a phase rotation order, such as L1-L2-L3 or L1-L3-L2, of the system does not limit the use of the various embodiments.

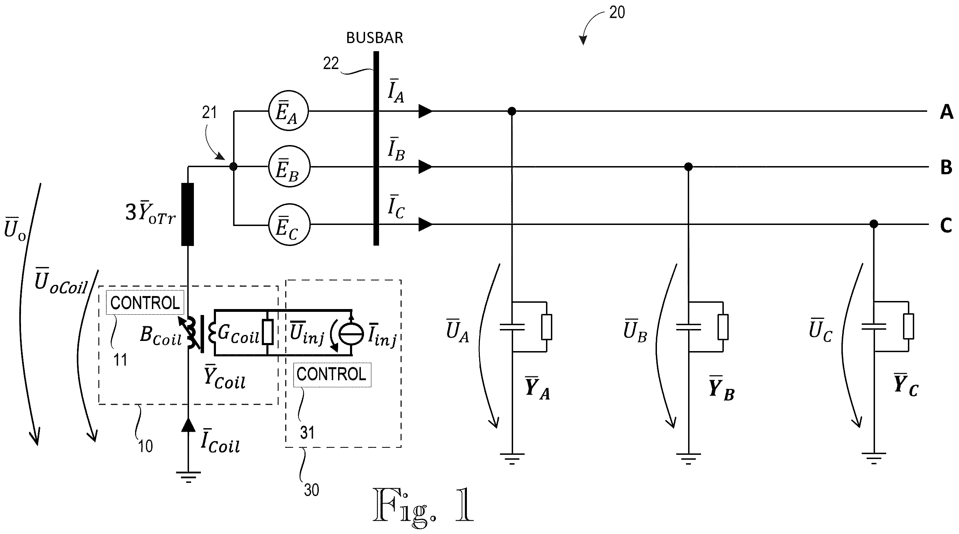

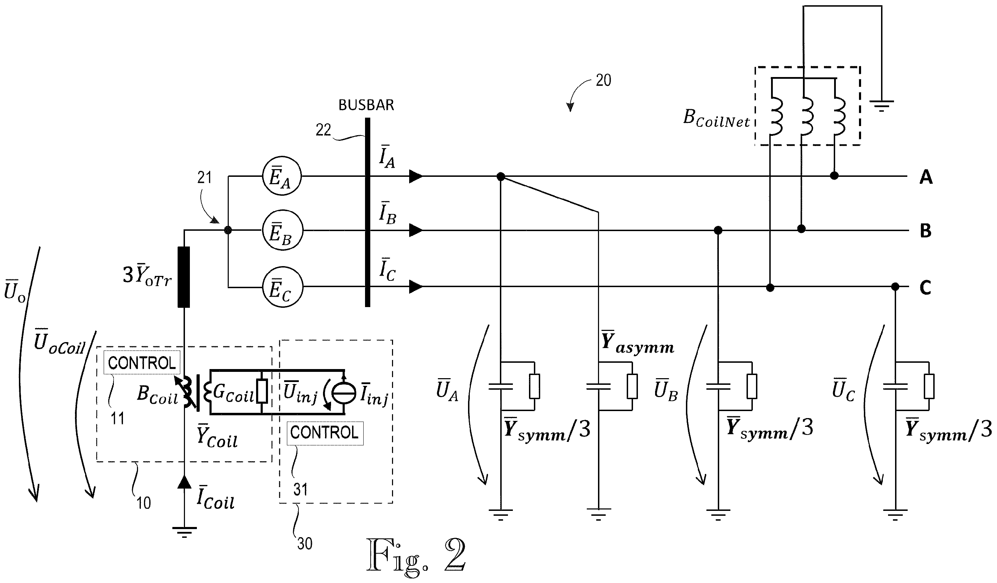

Figures 1 and 2 are simplified diagrams of an exemplary electric system (network) showing some equipment (e.g. apparatuses, devices, nodes) and functional entities, whose implementation and/or number and/or configuration may differ from what is shown in the examples of Figures 1 and 2. Such a system may also comprise other equipment, functional entities and/or structures, some of which used in or for big data, data management, and communication in the system or in any part of the system, for example. Also e.g. any communications protocols used may vary and may depend on the system characteristics, for instance. Figures 1 and 2 are diagrams illustrating simplified equivalent circuits of a three-phase electric network in which the various embodiments can be applied. The exemplary three-phase network with phases A, B and C may be a medium voltage (e.g. 20 kV) distribution network fed through a substation comprising a source $\overline{E}_A, \overline{E}_B, \overline{E}_C$, such as a transformer or generally a feeding point of the electric network, and a feeding busbar 22 connected to one or more electric line outlets (feeders) 20, for example. Respective phase currents of phases A, B and C are $\overline{I}_A, \overline{I}_B,$ and $\overline{I}_C$, with a positive current direction from the feeding point towards line as indicated by the arrows in the figure, and respective phase voltages are $\overline{U}_A, \overline{U}_B,$ and $\overline{U}_C$. Figures 1 and 2 further illustrate an arc suppression device (apparatus, equipment) 10, which is connected between a neutral point (star point, zero point) 21 of the three-phase electric network and earth. The arc suppression device 10 may be the only arc suppression device in the electric network or it may be a central arc suppression device, and the electric network may further comprise distributed compensation, i.e. one or more additional arc suppression devices distributed along the one or more electric line outlets (feeders) 20 and/or one or more additional arc suppression devices (not shown in the figures) located at the substation, for example. The arc suppression device 10 can be connected to the neutral point 21 of the electric network via an earthing transformer or any other suitable arrangement, for example. An admittance of the arc suppression device 10 is $\overline{Y}_{Coil}$ and the exemplary arc suppression device 10 as illustrated may comprise at least one adjustable coil. The arc suppression device 10 could comprise more than one adjustable and/or non-adjustable coil, for instance. $\overline{I}_{Coil}$ is the current flowing through the arc suppression device 10. The arc suppression device 10 may further include a controller for controlling, e.g. tuning, the adjustable coil, and also for generally controlling any functionality of the arc suppression device 10, for instance. Figures 1 and 2 further illustrate a current injection device (apparatus, equipment) 30, which is connected in parallel to the arc suppression device 10. The current injection device 30 may be a separate device or entity, possibly in a separate housing, or the current injection device 30 may be an integrated part of the arc suppression device 10, such as a module thereof, for example.

Current and voltage values used in the various embodiments described herein may be obtained by a suitable measuring arrangement, which may include current and/or voltage transducers (not shown in the figures) connected to the phases of the electric network or similar equipment, for example. Voltage and current quantities may also be measured at different locations, for instance. In existing electric networks and systems, such values are typically readily available and thus the implementation of the various embodiments does not necessarily require any separate or additional measuring arrangements. It should be noted that e.g. admittance, conductance, and/or susceptance could be used in any calculations and definitions disclosed herein in an analogous manner instead of impedance, resistance, and/or reactance, and vice versa, for example.

The figures also show a (first) control arrangement 11, such as a controller device or a control unit of the arc suppression device 10, located within the arc suppression device 10. Such a control arrangement 11 could also be located outside the arc suppression device 10 and could be configured to control more than one arc suppression devices 10, for example. In the exemplary systems of Figures 1 and 2, at least part of the functionality of the various embodiments may be located in the control arrangement 11, for example. The control arrangement 11 may be configured to receive necessary measurement data and/or perform at least some measurements by itself, and to control, i.e. tune, the adjustable coil of the arc suppression device 10. The figures further show a (second) control arrangement 31, such as a controller device or a control unit of the current injection device 30, located within the current injection device 30. Such a control arrangement 31 could also be located outside the current injection device 30. Such a control arrangement 31 could be a separate entity as illustrated in the examples or integrated with the control arrangement 11 of the arc suppression device 10, for example. In the exemplary systems of Figures 1 and 2, at least part of the functionality of the various embodiments may be provided by means of the control arrangement 31 of the current injection device 30, for example. It is thus possible that the functionalities of the first control arrangement 11 and the second control arrangement 31 are combined into one control arrangement which may thus control the operation of both the arc suppression devices 10 and the current injection device 30, for instance, and may implement at least part of the functionality of the various embodiments disclosed herein.

The following notation is used in Figure 1 (overbar denotes a complex quantity):

$\overline{E}_A$ is the phase A to neutral voltage of the source

$\overline{E}_B$ is the phase B to neutral voltage of the source

$\overline{E}_C$ is the phase C to neutral voltage of the source

$\overline{U}_A$ is the phase A to earth voltage at busbar

$\overline{U}_B$ is the phase B to earth voltage at busbar

$\overline{U}_C$ is the phase C to earth voltage at busbar

$\overline{U}_o$ is the neutral point voltage (the zero-sequence voltage) of the electric network, which can be measured e.g. at the busbar or at the source

$\overline{I}_{inj}$ is the injected current

$\overline{U}_{inj}$ is the output voltage of the current injection device

$\overline{U}_{oCoil}$ is the voltage over the arc suppression device

$\overline{I}_A$ is the phase A current at the source

$\overline{I}_B$ is the phase B current at the source

$\overline{I}_C$ is the phase C current at the source

$\overline{I}_{Coil}$ is the current through the arc suppression device

$\overline{Y}_A$ is the phase A to earth admittance of the electric network (excluding the arc suppression device 10)

$\overline{Y}_B$ is the phase B to earth admittance of the electric network (excluding the arc suppression device 10)

$\overline{Y}_C$ is the phase C to earth admittance of the electric network (excluding the arc suppression device 10)

$\overline{Y}_{oTr}$ is the zero-sequence admittance per phase of an earthing transformer or a main transformer, or another arrangement, which is used to form the neutral point of the electric network and through which the arc suppression device is connected to the electric network.

$\overline{Y}_{Coil} = G_{Coil} + j \cdot B_{Coil}$ is the admittance of the arc suppression device

$j$ is the imaginary unit also known as a complex operator

$G_{Coil}$ is the conductance of the arc suppression device corresponding to the parallel resistor and the natural losses of the coil

$B_{Coil}$ is the susceptance of the arc suppression device

The notation used in Figure 2 corresponds to that of Figure 1 except that in Figure 2 the inductive susceptance of the electric network due to possible distributed arc suppression device(s) $B_{CoilNet}$ is shown separately and the individual phase admittances of the electric line outlets 20 are presented with symmetrical phase admittances, whose sum equals the symmetrical network admittance:

$$\overline{Y}_{symm} = G_{symm} + j \cdot B_{symm}$$

(one third in each phase)

Parameter $G_{symm}$ is the real part of the symmetrical network admittance. The sign is positive and it represents the shunt losses of the electric network (excluding the losses of the arc suppression device). Parameter $B_{symm}$ is the imaginary part of the symmetrical network admittance. The sign is positive (capacitive) and it represents the capacitive uncompensated earth-fault current of the electric network.

The natural asymmetry (unbalance) present in a real system is due to differences in individual phase admittances and it has thus in practice an arbitrary value. In Figure 2 it is presented with an asymmetry admittance concentrated into phase A and presented with the asymmetry admittance:

$$\overline{Y}_{asymm} = G_{asymm} + j \cdot B_{asymm}$$

(only in phase A in the example)

The asymmetry admittance $\overline{Y}_{asymm} = G_{asymm} + j \cdot B_{asymm}$ represents the asymmetry of the phase-to-earth admittances of the electric network reduced to a lumped admittance in phase A. Parameter $G_{asymm}$ is the real part of asymmetry admittance. The sign may be positive or negative depending on the actual level of asymmetry. Parameter $B_{asymm}$ is the imaginary part of asymmetry admittance. The sign may be positive or negative depending on the actual level of asymmetry i.e. on the differences between the actual phase to earth admittances of the electric network.

The asymmetry admittance may also be calculated from phase-wise admittances as follows:

$$\overline{Y}_{asymm} = \overline{Y}_A + \bar{a}^2 \cdot \overline{Y}_B + \bar{a} \cdot \overline{Y}_C$$

The symmetry admittance may then be solved from the total admittance of the electric line outlets $\overline{Y}_{Net}$ as follows:

$$\overline{Y}_{symm} = \overline{Y}_{Net} - \overline{Y}_{asymm} = \overline{Y}_A + \overline{Y}_B + \overline{Y}_C - \overline{Y}_{asymm}$$

In the example of Figure 2 the following applies:

$$\overline{Y}_A = \frac{\overline{Y}_{symm}}{3} + \overline{Y}_{asymm} - j \frac{B_{CoilNet}}{3}$$

$$\overline{Y}_B = \frac{\overline{Y}_{symm}}{3} - j \frac{B_{CoilNet}}{3}$$

$$\overline{Y}_C = \frac{\overline{Y}_{symm}}{3} - j \frac{B_{CoilNet}}{3}$$

The theoretical basis of the embodiments disclosed herein lies in the idea that the power requirement of the current injection may depend on a system (electric network) damping and detuning, and essentially the effect of system detuning can be disregarded by using frequencies close to the resonant frequency of the zero-sequence system. Typically, the possible resonant frequencies in e.g. compensated distribution networks may be in a range from about 10 to about 250 Hz, which is a wide range to cover using preselected frequencies, for example. Therefore, according to an embodiment, the proposed solution uses dynamically selected frequencies that may be selected based on a determined resonant frequency of the three phase electric network so that network parameters can always be calculated using optimal frequencies. Thus, the power requirement of the current injection can be minimized in most or all the possible network tuning configurations even during severe detuning, for example. This allows to use lower injection current amplitudes and/or to operate in networks with higher detuning and damping levels without extensive power requirements, for instance.

The technical feasibility of using the resonant frequency can be understood based on following equations:

1. The total zero-sequence impedance and/or admittance of the three phase electric network (including the arc suppression device 10):

$$\overline{Z}_0(\omega_i) = \frac{U_0(\omega_i)}{\overline{I}'_{inj}(\omega_i)} = \frac{1}{G_{Coil} - jB_{Coil} + G_{Net} + j(B_{cNet} - B_{CoilNet})}$$

$$= \frac{1}{G_{Coil} + \dfrac{1}{j\omega_i L_{Coil}} + G_{Net} + j\left(\omega_i C_{Net} - \dfrac{1}{\omega_i L_{Net}}\right)}$$

$$= \frac{1}{G_{0Tot} + j\left(\omega_i C_{Tot} - \dfrac{1}{\omega_i L_{Tot}}\right)} = \frac{1}{I_d - j\left(\dfrac{\omega_s}{\omega_i} I_{Ltot} - \dfrac{\omega_i}{\omega_s} I_{Ctot}\right)} U_{PE}$$

$$= \frac{1}{I_d - jI_v'} U_{PE}$$

$$\overline{Y}_0(\omega_i) = \frac{\overline{I}'_{inj}(\omega_i)}{\overline{U}_0(\omega_i)} = G_{Coil} - jB_{Coil} + G_{Net} + j(B_{cNet} - B_{CoilNet})$$

$$= G_{Coil} + \frac{1}{j\omega_i L_{Coil}} + G_{Net} + j\left(\omega_i C_{Net} - \frac{1}{\omega_i L_{Net}}\right)$$

$$= G_{0Tot} + j\left(\omega_i C_{Tot} - \frac{1}{\omega_i L_{Tot}}\right) = \frac{1}{U_{PE}} \cdot \left(I_d - j\left(\frac{\omega_s}{\omega_i} I_{Ltot} - \frac{\omega_i}{\omega_s} I_{Ctot}\right)\right)$$

$$= \frac{I_d - jI_v'}{U_{PE}}$$

2. Zero-sequence voltage response due to current injection:

$$\overline{U}_0(\omega_i) = \frac{\overline{I}'_{inj}(\omega_i)}{\overline{Y}_0(\omega_i)} = \frac{\overline{I}'_{inj}(\omega_i)}{G_{Coil} - jB_{Coil} + G_{Net} + j(B_{cNet} - B_{CoilNet})}$$

$$= \frac{\overline{I}'_{inj}(\omega_i)}{G_{Coil} + \dfrac{1}{j\omega_i L_{Coil}} + G_{Net} + j\left(\omega_i C_{Net} - \dfrac{1}{\omega_i L_{Net}}\right)}$$

$$= \frac{\overline{I}'_{inj}(\omega_i)}{G_{0Tot} + j\left(\omega_i C_{Tot} - \dfrac{1}{\omega_i L_{Tot}}\right)} = \frac{\overline{I}'_{inj}(\omega_i)}{I_d - j\left(\dfrac{\omega_s}{\omega_i} I_{CoilTot} - \dfrac{\omega_i}{\omega_s} I_{cNet}\right)} U_{PE}$$

$$= \frac{\overline{I}'_{inj}(\omega_i)}{I_d - jI_v'} U_{PE}$$

At the resonant angular frequency ($\omega_i = \omega_{res}$) of the zero-sequence system of the electric network the above equations can be further simplified:

$$\overline{Z}_0(\omega_{res}) = \frac{\overline{U}_0(\omega_{res})}{\overline{I}'_{inj}(\omega_{res})} = \frac{1}{G_{Coil} + G_{Net}} = \frac{1}{G_{0Tot}} = \frac{U_{PE}}{I_d}$$

$$\overline{Y}_0(\omega_{res}) = \frac{\overline{I}'_{inj}(\omega_{res})}{\overline{U}_0(\omega_{res})} = G_{Coil} + G_{Net} = G_{0Tot} = \frac{I_d}{U_{PE}}$$

$$\overline{U}_0(\omega_{res}) = \frac{\overline{I}'_{inj}(\omega_{res})}{\overline{Y}_0(\omega_{res})} = \frac{\overline{I}'_{inj}(\omega_{res})}{G_{Coil} + G_{Net}} = \frac{\overline{I}'_{inj}(\omega_{res})}{G_{0Tot}} = \frac{\overline{I}'_{inj}(\omega_{res})}{I_d} U_{PE}$$

where:

$\overline{I}'_{inj}$ is the injected current reduced to primary voltage level e.g. as:

$$\overline{I}'_{inj} = \frac{U_{PAW}}{U_{PE}} \cdot \overline{I}_{inj}$$

where $U_{PAW}$ is the rated voltage of the power auxiliary winding of the arc suppression device

$\overline{U}_0$ is the zero-sequence voltage of the electric network

$\omega_i$ is the angular frequency of the current injection, which equals $2\pi \cdot f_i$ $f_i$ is the frequency of the current injection

$\omega_s$ is the synchronous angular frequency of the electric network, which equals $2\pi \cdot f_s$

$f_s$ is the synchronous frequency of the three-phase electric network, e.g. 50Hz. Alternatively, $f_s$ can also be a measured network frequency, for example.

$\omega_{res}$ is the angular resonant frequency of the zero-sequence system of the electric network, which equals $2\pi \cdot f_{res}$ (herein also referred as "network resonant angular frequency")

$f_{res}$ is the resonant frequency of the zero-sequence system of the electric network (herein also referred as "network resonant frequency")

$G_{Coil}$ is the conductance of the arc suppression device corresponding to the parallel resistor and the natural losses of the device

$B_{Coil}$ is the susceptance of the arc suppression device

$G_{Net}$ is the zero-sequence conductance of the electric network excluding the arc suppression device 10

$B_{cNet}$ is the zero-sequence capacitive susceptance of the electric network excluding the arc suppression device 10

$B_{CoilNet}$ is the zero-sequence inductive susceptance of the electric network due to distributed arc suppression device(s)

$L_{Coil}$ is the inductance of the arc suppression device

$C_{Net}$ is the zero-sequence capacitance of the electric network excluding the arc suppression device 10

$L_{Net}$ is the zero-sequence inductance of the electric network due to distributed arc suppression device(s)

$L_{Tot}$ is the total zero-sequence inductance of the electric network (including the arc suppression device 10). In this case, $L_{Tot} = \frac{L_{Coil} \cdot L_{Net}}{L_{Coil} + L_{Net}}$

$C_{Tot}$ is the total zero-sequence capacitance of the electric network (including the arc suppression device 10). In this case, $C_{Tot} = C_{Net}$.

$G_{0Tot}$ is the total zero-sequence conductance of the electric network (including the arc suppression device 10). In this case, $G_{0Tot} = G_{Net} + G_{Coil}$ $I_v' = \frac{\omega_s}{\omega_i} I_{Ltot} - \frac{\omega_i}{\omega_s} I_{Ctot}$, is the magnitude of the frequency-scaled electric network detuning

$I_d$ is the total electric network damping

$I_{Ctot}$ is the total capacitive earth fault current at $f_s$ of the electric network

$I_{Ltot}$ is the total inductive earth fault current produced by the arc suppression device 10 and any distributed arc suppression device(s) at $f_s$ of the electric network

$U_{PE}$ is the rated phase to earth voltage of the electric network

$\overline{Y}_{Net} = G_{Net} + j(B_{cNet} - B_{CoilNet}) = \overline{Y}_A + \overline{Y}_B + \overline{Y}_C = \overline{Y}_{symm} + \overline{Y}_{asymm} - jB_{CoilNet}$ is the admittance of the electric network excluding the arc suppression device 10.

It should be noted that in the previous equations $\overline{Y}_{oTr}$ is neglected as its impedance value is significantly smaller compared to coil impedance. Therefore, this assumption does not affect the results, and the following analysis are valid.

The following conclusions can be made:

- The outcome of the current injection therefore may essentially depend on the following parameters:

  ○ $\overline{I}'_{inj}$, the magnitude of the current injection. The phase angle is meaningful if the frequency of the injected current is equal to $f_s$.

○ $\omega_i$, the angular frequency of the current injection.

○ $I_d$, the magnitude of the electric network damping. The lower the damping, the greater the outcome of the current injection may be.

○ $I'_v = \dfrac{\omega_s}{\omega_i} I_{Ltot} - \dfrac{\omega_i}{\omega_s} I_{Ctot}$ , the magnitude of the frequency-scaled electric network detuning. More specifically, the result of the injection may depend on the difference between the electric network capacitive current to the inductive current when scaled considering the ratio of the current injection frequency $f_i$ to $f_s$. The closer the frequency-scaled detuning is to zero, the higher the outcome of the current injection may be.

- At the electric network resonant frequency, the zero-sequence voltage response is highest as the zero-sequence impedance, representing the load of the current injection, is limited to the resistive losses in the zero-sequence system, i.e., the electric network damping.

    ○ Power requirement of the current injection is minimal at the resonant frequency of the system.

- The zero-sequence impedance is the highest (admittance is the lowest) at the resonant frequency.

    ○ Minimum current injection amplitude is needed to achieve a certain voltage response, for example.

For current injections with frequency equal to $f_s$ the following equation further describes the voltage response due to current injection considering the asymmetry of the electric network:

$$\overline{U}_0 = \frac{-\overline{I}_{asymm} + \overline{I}_{inj}}{I_d - jI_v} U_{PE}$$

where:

$I_v = I_{Ltot} - I_{Ctot}$ is the electric network detuning at $f_s$

$\overline{I}_{asymm}$ is the asymmetric current due to asymmetry of the phase wise admittances presented with asymmetry admittance $\overline{Y}_{asymm}$.

The asymmetric current $\overline{I}_{asymm}$ due to natural asymmetry may be expressed as follows:

$$\overline{U}_0 = -U_{PE} \frac{\overline{Y}_{asymm}}{\overline{Y}_{asymm} + \overline{Y}_{symm} + \overline{Y}_{Coil}}$$

$$\overline{U}_0 \overline{Y}_{Coil} = \overline{I}_{asymm} + \overline{U}_0 \overline{Y}_{symm} \quad \Rightarrow \quad \overline{I}_{asymm} = \overline{U}_0 \left( \overline{Y}_{Coil} - \overline{Y}_{symm} \right)$$

$$\overline{I}_{asymm} = -U_{PE} \frac{\left( \overline{Y}_{Coil} + \overline{Y}_{symm} \right) \overline{Y}_{asymm}}{\overline{Y}_{asymm} + \overline{Y}_{symm} + \overline{Y}_{Coil}}$$

The following conclusions can be made:

- The outcome of the current injection with frequency equal to $f_s$ therefore may essentially also depend on the following parameters:

    ○ $\overline{I}_{asymm}$, the magnitude of the asymmetric current due to asymmetry of the phase wise admittances. The higher the asymmetry, the higher the $\overline{I}_{asymm}$.

    ○ Phase angle difference between $\overline{I}_{inj}$ and $\overline{I}_{asymm}$. The angle difference e.g. determines whether the natural zero-sequence voltage is increased or decreased by the current injection.

The resonant frequency of the zero-sequence system can further be understood when analyzing the following equation describing the resonant frequency:

$$f_{res} = \frac{1}{2\pi\sqrt{\dfrac{L_{Coil} \cdot L_{Net}}{L_{Coil} + L_{Net}} C_{Net}}} = \frac{1}{2\pi\sqrt{L_{Tot}C_{Tot}}} = f_s\sqrt{\frac{I_{Ltot}}{I_{Ctot}}}$$

The following conclusions can be made:

- The resonant frequency is essentially directly dependent on the ratio of the inductive to capacitive earth fault current at $f_s$.
- The resonant frequency varies based on the electric network detuning, and is typically in range of about 10-250 Hz

  ○ To adapt for different resonant frequencies, the current injection frequency should be preferably dynamically selected.
  ○ No single multi-frequency signal or pulse pattern can cover the range 10-250 Hz without significant gaps.

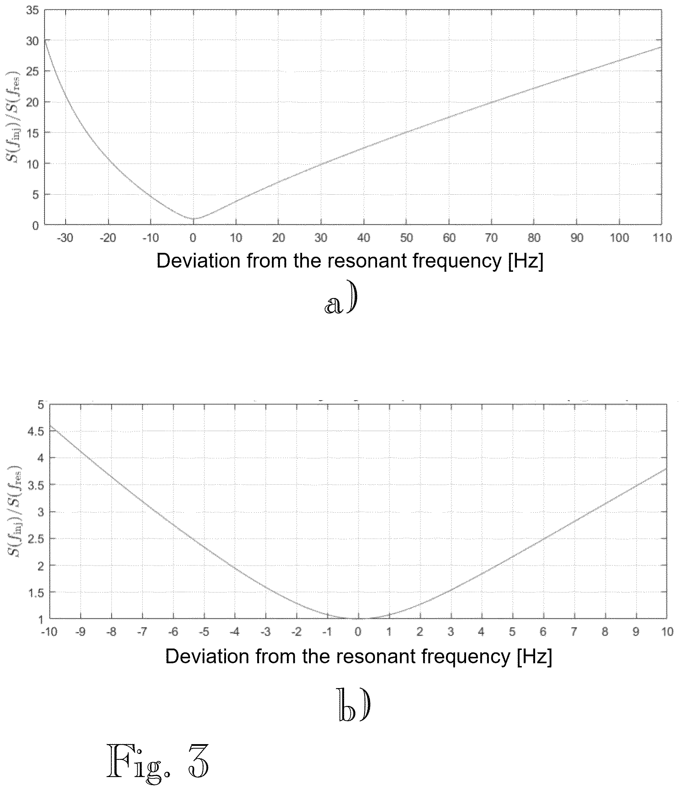

Figure 3 illustrates an example of a typical output power requirement at various current injection frequencies $f_{inj}$ compared to resonant frequency $f_{res}$ to achieve any voltage response. The power ratio = $S(f_{inj})/S(f_{res})$ is shown as a function of frequency deviation from the resonant frequency $f_{inj}$ - $f_{res}$. Alternative a) shows a larger frequency range while alternative b) shows in more detail frequency deviation range from -10 to 10 Hz. While the exemplary graph of Figure 3 illustrates a generalization, it however applies to several configurations, even for different detuning values, and thus generally illustrates the effect of the frequency of the injected current on the required power to obtain corresponding response. For example, when the frequency difference from the resonant frequency is 5 Hz, the power requirement is more than doubled compared to using the resonant frequency. Similarly, a 10 Hz deviation results in approximately four times higher power requirement. This clearly illustrates the benefits of using the resonant frequency compared to other frequencies for networks of different sizes. It should be noted that the results may slightly vary depending on e.g. the selected resonant frequency, however using $f_{res}$ = 50 *Hz* (in this example the electric network synchronous frequency) can represent average results with sufficient accuracy.

According to an embodiment, a method for controlling an arc suppression device of a three-phase electric network, wherein the arc suppression device has an adjustable admittance connected between a neutral point of the three-phase electric network and earth, comprises determining a resonant frequency of a zero-sequence system of the three-phase electric network, and determining at least two frequencies for a current injection on the basis of the determined resonant frequency. The method further comprises performing a current injection into the neutral point of the three-phase electric network by using the determined at least two frequencies, determining a value of at least one parameter related to the three-phase electric network on the basis of the current injection, and using the determined value of the at least one parameter for adjusting the admittance of the arc suppression device. The using of the determined value of the at least one parameter for adjusting the admittance of the arc suppression device may comprise adjusting the admittance of the arc suppression device on the basis of the determined value of the at least one parameter.

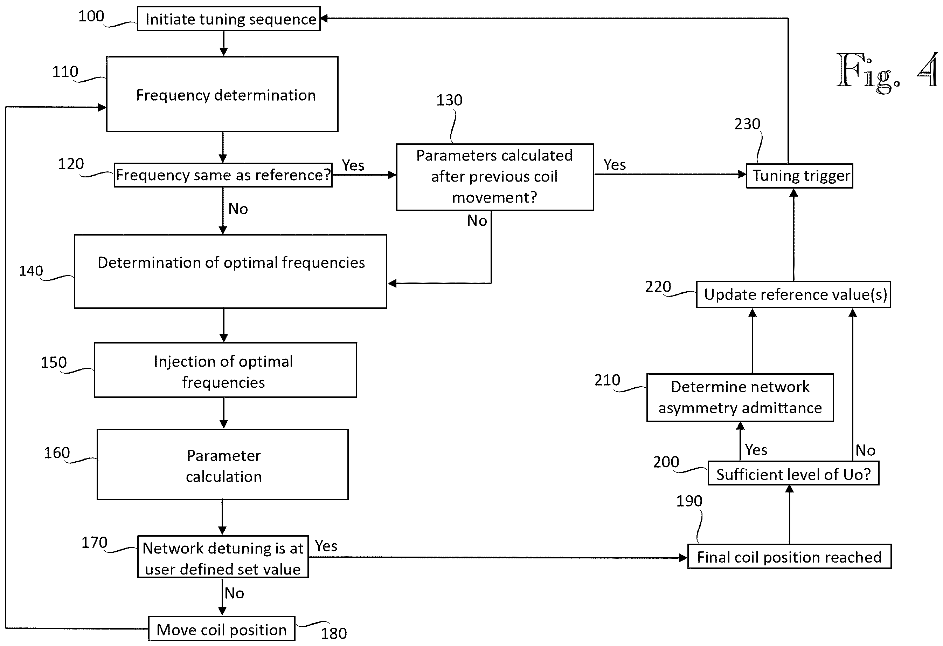

Figure 4 shows a flow diagram according to an embodiment. It should be noted that the example of Figure 4 shows several optional features. The tuning of the arc suppression device 10 is started (initiated) in step 100. The starting may take place e.g. manually or automatically in response to a predetermined condition being met.

According to an embodiment, the determining of the resonant frequency of the zero-sequence system of the three-phase electric network may comprise sequentially injecting current signals of varying frequency or frequencies into the neutral point of the three-phase electric network, monitoring a response in the three-phase electric network to the sequential injection of the current signals and determining the resonant frequency of the zero-sequence system of the three-phase electric network on the basis of the monitored response in the three-phase electric network to the sequential injection of the current signals. According to an embodiment, the sequential injection of the current signals is performed as a frequency sweep, wherein the frequency or frequencies of the sequentially injected current signals are varied between a predetermined minimum frequency $f_{min}$ and a predetermined maximum frequency $f_{max}$. According to an embodiment, the frequency or frequencies of the sequentially injected current signals may be varied between the predetermined minimum frequency and the predetermined maximum frequency in an increasing manner starting from the predetermined minimum frequency or in a decreasing manner starting from the predetermined maximum frequency. According to an embodiment, the frequency or frequencies of the sequentially injected current signals are varied in a continuous manner or in a discrete manner. Accordingly, the determining 110 of the resonant frequency of the zero-sequence system of the three-phase electric network may include performing the determination of the zero-sequence system resonant frequency with a sufficient accuracy, preferably with a precision that is from fractions of a hertz to a few hertz, for example. According to an embodiment, to accurately determine the resonant frequency, a frequency sweep method may be used, wherein e.g. a sinusoidal current signal is injected with a varying frequency continuously or discretely from $f_{min}$ to $f_{max}$, preferably with a predetermined frequency step $f_{step}$ and time per frequency $t_{step}$, e.g., from few hundred of milliseconds to seconds. According to an embodiment, the injection sequence used for determining the resonant frequency can further be optimized with multiple, i.e. two or more, frequency sweeps with different settings: $f_{min}$, $f_{max}$, $f_{step}$ and $t_{step}$ and each iteration sweep can be adjusted based on the results of the previous sweep so that the method converges and locates the resonant frequency accurately with the least amount time and least number of injected frequencies, for example. The current injection signal may have the following sinusoidal form:

$$I'_{inj}(t, f_i, \theta) = \hat{I}'_{inj} sin(2\pi f_i t + \theta), \qquad f_i \in [f_{min}, f_{max}], \theta \in [0, 2\pi]$$

where:

$\hat{I}'_{inj}$ is the peak amplitude value of the current signal reduced to primary voltage level, e.g, $\hat{I}'_{inj} = \sqrt{2}\left|\overline{I}'_{inj}\right|$

t is the time in seconds.

According to an embodiment, the amplitude of the signal $\left|\overline{I}'_{inj}\right|$ (in phasor domain/rms value) in primary voltage level can be selected e.g. by considering the zero-sequence voltage response target $\overline{U}_{0\_target}$, when the electric network damping $I_d$ is known or can be estimated:

$$\left|\overline{I}'_{inj}\right| = \frac{\left|\overline{U}_{0\_target}\right|}{U_{PE}} I_d$$

where: $|\overline{U}_{0\_target}|$ is the highest possible voltage response for current injection with amplitude $\left|\overline{I}'_{inj}\right|$. Also, the maximum allowed injection current level can be calculated using the previous equation.

According to an embodiment, the resonant frequency can then be determined on the basis of the monitored response in the three-phase electric network to the sequential injection of the current signals. According to an embodiment, the resonant frequency can be determined to be the frequency for which the highest or maximum, or generally most significant, response of electrical system is achieved or observed. For example, the frequency at which the electric network zero sequence impedance/admittance is in resonance. Such a highest or maximum, or generally most significant, response of the electrical system may be detected in response to a predetermined parameter or quantity of the three-phase electric network reaching its highest (maximum) or lowest (minimum) value, for example. This may be determined e.g. according to any one of the following conditions or any combination thereof:

1. Highest effective zero-sequence voltage value: $max|\overline{U}_0(f_i)|$ (constant injection current amplitude $|\overline{I}_{inj}(f_i)|$ supplied at all frequencies $[f_{min}, f_{max}]$),
2. Lowest effective injection device current value: $min|\overline{I}_{inj}(f_i)|$ (constant injection voltage amplitude $|\overline{U}_{inj}(f_i)|$ supplied at all frequencies $[f_{min}, f_{max}]$)
3. Highest effective zero-sequence impedance value: $max|\overline{Z}_0(f_i)|$
4. Lowest effective zero-sequence admittance value: $min|\overline{Y}_0(f_i)|$

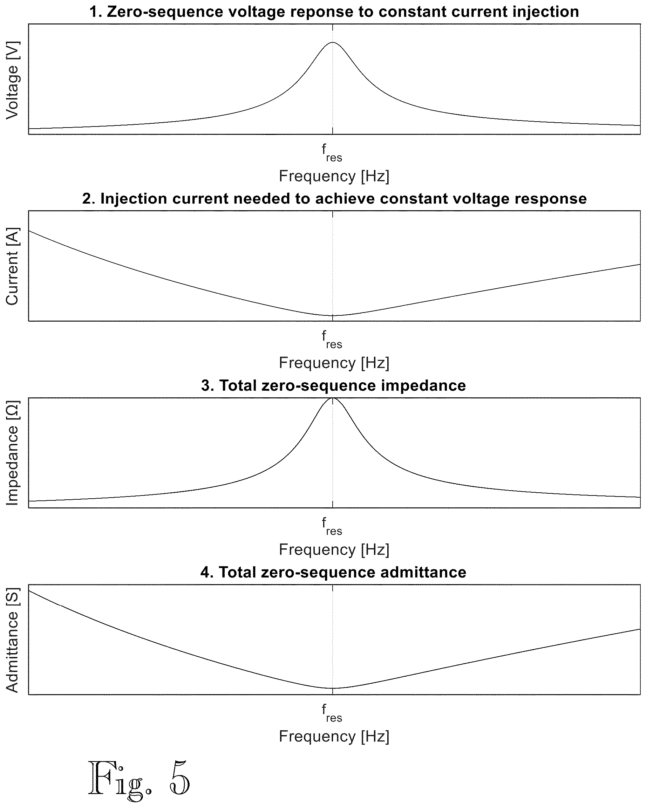

Figure 5 shows an exemplary diagram in which an example of each of the above situations 1-4 is shown. More specifically, in Figure 5 the first diagram shows an example of a zero-sequence voltage response curve to a constant current injection, the second diagram shows an example of an injection current needed to achieve a constant voltage response, the third diagram shows an example of a total zero-sequence impedance response curve, and the fourth diagram shows an example of a total zero-sequence admittance response curve. The resonant frequency can then be found on the basis of the maximum or minimum value of the response curve, which represents the highest response to the current injection.

According to an embodiment, the determination of the resonant frequency, e.g. for previous conditions 3 and 4, can be expressed by a mathematical formula as follows:

$$f_{res} = \underset{f_i \in [f_{min}, f_{max}]}{\arg\max} |\overline{Z}_0(f_i)|$$

$$f_{res} = \underset{f_i \in [f_{min}, f_{max}]}{\arg\min} |\overline{Y}_0(f_i)|$$

And, in terms of $\omega_i = 2\pi f_i$, where $f_i \in [f_{min}, f_{max}]$,

$$\omega_{res} = \underset{\omega_i \in [\omega_{min}, \omega_{max}]}{\arg\max} |\overline{Z}_0(\omega_i)|$$

$$\omega_{res} = \underset{\omega_i \in [\omega_{min}, \omega_{max}]}{\arg\min} |\overline{Y}_0(\omega_i)|$$

According to an embodiment, $\overline{Z}_0(f_i)$ and/or $\overline{Y}_0(f_i)$ can be determined based on a measured zero-sequence voltage in respect to injection current at the frequency of the current injection when $f_i \neq f_s$ (in completely symmetrical networks $f_i = f_s$ is also allowed):

$$\overline{Z}_0(f_i) = \frac{\overline{U}_0(f_i)}{\overline{I}'_{inj}(f_i)}$$

$$\overline{Y}_0(f_i) = \frac{\overline{I}'_{inj}(f_i)}{\overline{U}_0(f_i)}$$

According to an embodiment, for $f_i = f_s$, to determine $\overline{Z}_0(f_s)$ and $\overline{Y}_0(f_s)$ the delta calculation can be applied as follows to remove the influence of the natural asymmetry of the electric network:

$$\overline{Z}_0(f_s) = \frac{\Delta \overline{U}_0(f_s)}{\Delta \overline{I}'_{inj}(f_s)} = \frac{\overline{U}_0^2(f_s) - \overline{U}_0^1(f_s)}{\overline{I}'^2_{inj}(f_s) - \overline{I}'^1_{inj}(f_s)}$$

$$\overline{Y}_0(f_s) = \frac{\Delta \overline{I}'_{inj}(f_s)}{\Delta \overline{U}_0(f_s)} = \frac{\overline{I}'^2_{inj}(f_s) - \overline{I}'^1_{inj}(f_s)}{\overline{U}_0^2(f_s) - \overline{U}_0^1(f_s)}$$

where: $\overline{U}_0^1(f_s)$ and $\overline{U}_0^2(f_s)$ are responses for two different current injection signals $\overline{I}'^1_{inj}(f_s)$ and $\overline{I}'^2_{inj}(f_s)$ for which $\overline{I}'^1_{inj}(f_s) \neq \overline{I}'^2_{inj}(f_s)$ either by amplitude and/or phase angle.

This then may require using two different e.g. sequential current injection cycles at the synchronous frequency of the three-phase electric network, $f_s$, with different amplitude and/or phase angles, for example.

However, using $f_i = f_s$ or frequencies close to it can also be avoided, so that the frequency range may be modified as follows:

$$f_i \in [f_{min}, f_{max}] \setminus f_s$$

or

$$f_i \in [f_{min}, f_{max}] \setminus [f_{s\_min}, f_{s\_max}]$$

where:

- $[f_{min}, f_{max}]$ is a total frequency range
- $[f_{s\_min}, f_{s\_max}]$ is an excluded frequency range (close to $f_s$) so that:

  o

$$f_{min} < f_{s\_min} < f_s$$

  o

$$f_s < f_{s\_max} < f_{max}$$

According to an embodiment, the injection current may be measured directly at the output of the current injection source, e.g., from a power auxiliary winding of the arc suppression device where the current signal may be injected. The zero-sequence voltage response however can be measured from various points, thus resulting alternative variants of the zero-sequence impedance and/or admittance. These variants may include a voltage measurement winding of the arc suppression device, power auxiliary windings of the arc suppression device, open delta windings of a voltage transformer(s) or calculated vector sum of the measured phase voltages, for example, each with different advantages.

According to another embodiment, the determining 110 of the resonant frequency of the zero-sequence system of the three-phase electric network could be performed as described in EP 1693679 B1, wherein the frequency spectrum is injected not sequentially but simultaneously. The auxiliary injection signal may be injected in a form of a pulse, wherein the frequency spectrum of the injection pulse may cover a range between a selectable minimum and maximum frequencies substantially without gaps and the resonant frequency of the electric system is contained in the frequency spectrum.

According to an embodiment, the sequentially injected current signals may be multifrequency current signals each multifrequency current signal comprising at least two different frequencies. Accordingly, the determining 110 of the resonant frequency of the zero-sequence system of the three-phase electric network could be implemented as a hybrid method wherein a set of different multifrequency current signals (each with e.g. 2 or more frequency components), or pulse patterns are sequentially injected, so that the sequential and simultaneous injection methods may be combined. In this case, by sequentially injecting selected multifrequency signals or pulse patterns, the resonant frequency can be determined efficiently, with a smaller number of required current injection cycles. These multi-frequency signals may have the following form:

$$I'_{inj}(t, f_1, f_2, \ldots, f_n, \theta_1, \theta_2, \ldots, \theta_n)$$
$$= \hat{I}'_{inj}(f_1)sin(2\pi f_1 t + \theta_1) + \hat{I}'_{inj}(f_2)sin(2\pi f_2 t + \theta_2) \ldots$$
$$+ \hat{I}'_{inj}(f_n)sin(2\pi f_n t + \theta_n)$$

with $n \geq 2$ number of frequency components. However, adding more frequency components may also increase the power requirement needed to produce such a multifrequency current injection signal.

After the determining 110 the resonant frequency, it may be optionally checked 120 whether the determined frequency corresponds to a reference frequency and, if yes, it may be additionally checked 130, whether any parameters have been calculated after a possible previous coil movement. If yes, the further steps 140-220 may be skipped. Step 130 can ensure that any calculated parameter value(s) possibly used for further calculations or reference purposes, for example, are re-calculated after every coil movement during the algorithm. According to an embodiment, the reference frequency may correspond to the determined network resonant frequency after a successful coil tuning operation.

According to an embodiment, the determining 140 of the at least two frequencies for the current injection on the basis of the determined resonant frequency may comprise selecting a first frequency $f_1$ and at least one second frequency $f_2$. Generally, the selection of the two or more frequency components may be based on a mathematical formula and/or any other common principle or criteria that utilizes or is dependent on the found resonant frequency, e.g., $f_1 = f_{res}$ and $f_2 = f_{res} + 1Hz$. According to an embodiment, the determining of the at least two frequencies for the current injection on the basis of the determined resonant frequency comprises selecting a first frequency $f_1$ and at least one second frequency $f_2$ according to any one of the following alternatives:

$$f_1 = f_{res}, f_2 = f_{res} + x$$

$$f_1 = f_{res} + y, f_2 = f_{res} + z$$

$$f_1 = f_{res} \cdot a, f_2 = f_{res} \cdot b$$

where:

$f_{res}$ is the determined resonant frequency,
$x, y$ and $z$ are predetermined and/or dynamically selected variables (value may be positive or negative), for example and
$a$ and $b$ are predetermined and/or dynamically selected coefficients (positive value)

The dynamic selection of variables $x, y, z$ and/or coefficients $a, b$ may in this case mean that their value is chosen dynamically based on e.g. the determined resonant frequency $f_{res}$. This is because it can be beneficial to adjust the frequency selection depending on the found resonant frequency $f_{res}$, for example. Also, the selection of variables $x, z$ and/or coefficient b for selecting $f_2$ may be dependent on the selection of $f_1$. Similarly, the selection of variable $y$ and/or coefficient $a$ for selecting $f_1$ may be dependent on the selection of $f_2$.

According to an embodiment, the determining 140 of the at least two frequencies for the current injection can also utilize the results from a previous frequency sweep in step 110 so that two or more frequency components are selected directly based on the results of the frequency sweep. I.e., two or more frequencies may be selected directly based on the results/responses given by the frequency sweep. E.g., two or more frequencies giving the highest response during the frequency sweep may be selected. There may also be a certain required or predetermined and/or dynamically selected frequency difference between the selected frequencies, for example.

According to an embodiment, other possible/example selections for the at least two frequencies $f_1$ and $f_2$ may include any one of the following examples:

- Two frequencies giving the highest response during the sweep.
- Two frequencies giving the highest response during the sweep so that there is a set frequency difference or ratio between $f_1$ and $f_2$.

According to an embodiment, to optimally select the frequencies, at least two conditions should preferably be considered:

A. The electric network's response is highest for frequencies close to the resonant frequency of the electric network, yielding maximum measurement accuracy for the resulting zero-sequence voltage and injected current. Also, the output power requirement for obtaining the highest response becomes minimal.
B. When performing calculation, the numerical stability (immunity to measurement inaccuracies) may be improved when the frequency difference between the selected frequencies is higher.

According to an embodiment, essentially similar frequency selection methods, equations, principles and/or criteria as described in the examples above for selecting the two frequencies $f_1$ and $f_2$ can be applied in an essentially similar manner also for selecting any number of frequencies more than two, e.g. $f_1, f_2, ..., f_n$, where $n$ is the number of selected frequencies (greater than two). Generally, the number n ($\geq 2$) of such frequencies $f_n$ may be selected case-specifically based on system characteristics, for example.

According to an embodiment, the determining 140 of the at least two frequencies for the current injection can further be adjusted so that $f_s$ (the electric network frequency) or any frequency that is close to $f_s$ may be disregarded. In such a case the next best possible frequency option may be selected. This could be implemented to avoid the need to inject current at the electric network's frequency and/or to consider the digital filter implementations that may be required to remove the influence of the electric network frequency component from the measurements, for example.

After the determining 140 of the at least two frequencies for the current injection a current injection into the neutral point of the three-phase electric network may then be performed 150 by using the determined at least two frequencies.

According to an embodiment, the injection current amplitude in step 150 can be adjusted to the suitable level based on the analyzed network response during step 110. According to an embodiment, this can be done e.g. as follows:

1. An estimate value of the total electric network damping can be calculated based on an achieved network voltage response at the resonant frequency during step 110:

$$I_d = \frac{U_{PE}}{|\overline{U}_0(f_{res})|}\left|\overline{I}'_{inj}(f_{res})\right|$$

where: $|\overline{U}_0(f_{res})|$ is the measured voltage response for the measured current injection amplitude $\left|\overline{I}'_{inj}(f_{res})\right|$ during step 110 at $f_{res}$

2. A suitable current injection amplitude can then be calculated using the estimated value of the electric network damping:

$$\left|\overline{I}'_{inj}\right| = \frac{\left|\overline{U}_{0\_target}\right|}{U_{PE}} I_d$$

where: $|\overline{U}_{0\_target}|$ is the target voltage response (sufficient zero-sequence voltage response that does not exceed earth-fault detection threshold) for current injection with amplitude $\left|\overline{I}'_{inj}\right|$. Optionally, it may be further beneficial to select higher amplitudes for the current injections with at least two frequencies $\left|\overline{I}'_{inj}(f_1)\right|$ and $\left|\overline{I}'_{inj}(f_2)\right|$ depending on the values between $f_1$ and $f_2$ compared to $f_{res}$. This can be done for example dynamically by considering the difference between $f_1$ and $f_2$ compared to $f_{res}$. E.g., the higher the difference, the higher amplitude for current is selected. This can be based on a mathematical formula or equation or any set criteria that e.g. consider values $f_1$, $f_2$ and $f_{res}$ and their difference, for example. Also, the information shown in the examples of Figure 3, or corresponding information, can be used when selecting the current injection amplitude for the at least two frequencies $f_1$ and $f_2$ that may have a certain deviation from the resonant frequency $f_{res}$. The power ratio = $S(f_{inj})/S(f_{res})$ can be e.g. used as a coefficient when selecting the current injection amplitude for the at least two frequencies $\left|\overline{I}'_{inj}(f_1)\right|$ and $\left|\overline{I}'_{inj}(f_2)\right|$ when considering the frequency deviation between $f_1$ and $f_2$ compared to $f_{res}$. For this, it may be further beneficial to use multiple versions of power ratio = $S(f_{inj})/S(f_{res})$ that could be applied for various resonant frequency operation points $f_{res}$ (exemplary Figure 3 illustrates average results with $f_{res}$ = 50 $Hz$). This makes it possible to accurately select the amplitudes for current injection with the at least two frequencies $\left|\overline{I}'_{inj}(f_1)\right|$ and $\left|\overline{I}'_{inj}(f_2)\right|$ based on calculated current injection amplitude $\left|\overline{I}'_{inj}\right|$ that applies for current injections with resonant frequency $f_{res}$. This can be mathematically expressed as follows:

$$\left|\overline{I}'_{inj}(f_1)\right| = PowerRatio \cdot \left|\overline{I}'_{inj}\right|$$

$$\left|\overline{I}'_{inj}(f_2)\right| = PowerRatio \cdot \left|\overline{I}'_{inj}\right|$$

Where:

$\left|\overline{I}'_{inj}(f_1)\right|$ is the current injection amplitude for frequency $f_1$ that approximately corresponds to the voltage response target $|\overline{U}_{0\_target}|$

$\left|\overline{I}'_{inj}(f_2)\right|$ is the current injection amplitude for frequency $f_2$ that approximately corresponds to the voltage response target $|\overline{U}_{0\_target}|$

$\left|\overline{I}'_{inj}\right|$ is the calculated current injection amplitude with frequency $f_{res}$ that corresponds to the voltage response target $|\overline{U}_{0\_target}|$.

*PowerRatio* is the power ratio (from exemplary Figure 3 or any other equivalent graph) that corresponds to the frequency deviation between current injection frequency $f_{inj}$ and $f_{res}$.

After or during the performing of the current injection 150, a value of at least one parameter related to the three-phase electric network is determined 160 on the basis of the current injection 150. According to an embodiment, the at least one parameter related to the three-phase electric network may comprise one or more of the following parameters: a total zero-sequence resistance of the three-phase electric network, a total zero-sequence inductance of the three-phase electric network, a total zero-sequence capacitance of the three-phase electric network, or any of the previous expressed in terms of currents, for example. Generally, any known applicable equations may be utilized for the determining 160 of the value of at least one parameter related to the three-phase electric network.

According to an embodiment, the solution disclosed in DE 10307668 B3 could be utilized in step 160 as follows:

$$\overline{Y}_0(\omega_i) = \frac{\overline{I}'_{inj}(\omega_i)}{\overline{U}_0(\omega_i)} = G_{0Tot} + j\left(\omega_i C_{Tot} - \frac{1}{\omega_i L_{Tot}}\right)$$

$$\xRightarrow{\omega_1,\omega_2} \begin{cases} C_{Tot} = \dfrac{imag\{\overline{Y}_{0\_\omega 1}\}\omega_1 - imag\{\overline{Y}_{0\_\omega 2}\}\omega_2}{\omega_1^2 - \omega_2^2} \\ L_{Tot} = \dfrac{\omega_1^2 - \omega_2^2}{imag\{\overline{Y}_{0\_\omega 1}\}\omega_1\omega_2^2 - imag\{\overline{Y}_{0\_\omega 2}\}\omega_2\omega_1^2} \\ \qquad G_{0Tot} = real\{\overline{Y}_{0\_\omega 1}\} \end{cases}$$

$$I_v = U_{PE}\left(\frac{1}{\omega_s L_{Tot}} - \omega_i C_{Tot}\right)$$

Or according to an alternative embodiment:

$$\overline{Y}_0(\omega_i) = \frac{\overline{I}'_{inj}(\omega_i)}{\overline{U}_0(\omega_i)} = \frac{1}{U_{PE}} \cdot \left(I_d - j\left(\frac{\omega_s}{\omega_i}I_{Ltot} - \frac{\omega_i}{\omega_s}I_{Ctot}\right)\right)$$

$$\xRightarrow{\omega_1,\omega_2} \begin{cases} I_{Ctot} = U_{PE}\omega_s \dfrac{imag\{\overline{Y}_{0\_\omega 1}\}\omega_1 - imag\{\overline{Y}_{0\_\omega 2}\}\omega_2}{\omega_1^2 - \omega_2^2} \\ I_{Ltot} = U_{PE}\dfrac{\omega_1\omega_2}{\omega_s}\dfrac{imag\{\overline{Y}_{0\_\omega 1}\}\omega_2 - imag\{\overline{Y}_{0\_\omega 2}\}\omega_1}{\omega_1^2 - \omega_2^2} \\ \qquad I_d = real\{\overline{Y}_{0\_\omega 1}\}U_{PE} \end{cases}$$

According to an embodiment, the electric network detuning at $f_s$ can then be calculated as follows: $I_v = I_{Ltot} - I_{Ctot}$

After the determining 160 of the value of at least one parameter, the determined value of the at least one parameter is used for adjusting the admittance of the arc suppression device 10. The using of the determined value of the at least one parameter for adjusting the admittance of the arc suppression device may comprise adjusting the admittance of the arc suppression device on the basis of the determined value of the at least one parameter. Such using may optionally comprise first checking 170, based on the determined value of the at least one parameter, whether the electric network detuning is at a predetermined or desired, e.g. a user defined, value or level. If not, the admittance of the arc suppression device 10 may then be adjusted, which may comprise e.g. suitably moving 180 the coil position, on the basis of the determined value of the at least one parameter. The adjusting of the admittance of the arc suppression device 10 on the basis of the determined value of the at least one parameter may be generally performed by any suitable manner known as such, for example, and the implementation may depend on the characteristics of the arc suppression device 10, for instance. After such adjustment, it is possible to proceed back to step 110 in order to redetermine the value of the at least one parameter. Thus, the adjusting of the admittance of the arc suppression device 10 may comprise consecutive rounds of adjustments until the the electric network detuning is at the predetermined or desired, e.g. a user defined, value or level, for example. According to another embodiment, it would be possible to proceed from step 180 directly to step 190, for example.

According to an embodiment, after the arc suppression device 10 has reached 190 the final adjusted position, it may be checked 200 whether the resulting value of the zero-sequence voltage is of a sufficient level (magnitude).

According to an embodiment, it is possible to further determine 210 a network asymmetry admittance. This optional step involves additional calculations needed to solve the resonance curve, which however is not required in the coil tuning application but may be calculated for illustrative purposes, for example. In step 210, the solution obtained in step 160 may be extended so that the asymmetrical and symmetrical part of the zero-sequence impedance, admittance and/or current can be solved. This can be done using any known method, wherein the asymmetrical part of the zero-sequence admittance (or asymmetry in current form) is solved based on the solved network parameter(s) in step 160, for example. This can be done e.g. using the following equation:

$$U_0 = \frac{I_{asymm}}{|I_d - j \cdot I_v|} U_{PE}$$

where:

$U_0$ is the absolute of the zero-sequence voltage (residual voltage)
$I_{asymm}$ is the absolute value of an asymmetric current that describes the electric network asymmetry (unbalance)
$I_v$ is the electric network detuning at $f_s$ (solved in step 160)
$I_d$ is the total electric network damping including parallel resistor (solved in step 160)
$U_{PE}$ is the rated phase-to-ground voltage

According to an embodiment, in practice the resonance curve calculation may require the following steps:

1. Determine the total electric network detuning $I_v$ and damping $I_d$ (solved in step 160)
2. Calculate distributed compensation using:

$$I_{Lnet} = I_{Ltot} - I_{pos}$$

where:

$I_{Ltot}$ is the total inductive earth fault current produced by the connected arc suppression device and any distributed arc suppression device(s) at $f_s$ of the electric network (solved in step 160)

$I_{pos}$ is the position of the adjustable coil in terms of amperes $I_{Lnet}$ is the inductive earth fault current of the electric network due to any distributed arc suppression device(s) at $f_s$

3. Measure absolute value of a healthy state residual voltage $U_0$
4. Calculate absolute value of the asymmetric current $\bar{I}_{asymm}$ using equation:

$$I_{asymm} = \frac{U_0}{U_{PE}} |I_d - j \cdot I_v|$$

5. Calculate residual voltage $U_0$ as a function of coil position in amperes $I_{pos}$ using equation:

$$U_0(I_{pos})[V] = \frac{I_{asymm}}{\left|I_d - j \cdot (I_{pos} + I_{Lnet} - I_{Ctot})\right|} U_{PE}$$

or with per unit value:

$$U_0(I_{pos})[pu] = \frac{I_{asymm}}{\left|I_d - j \cdot (I_{pos} + I_{Lnet} - I_{Ctot})\right|}$$

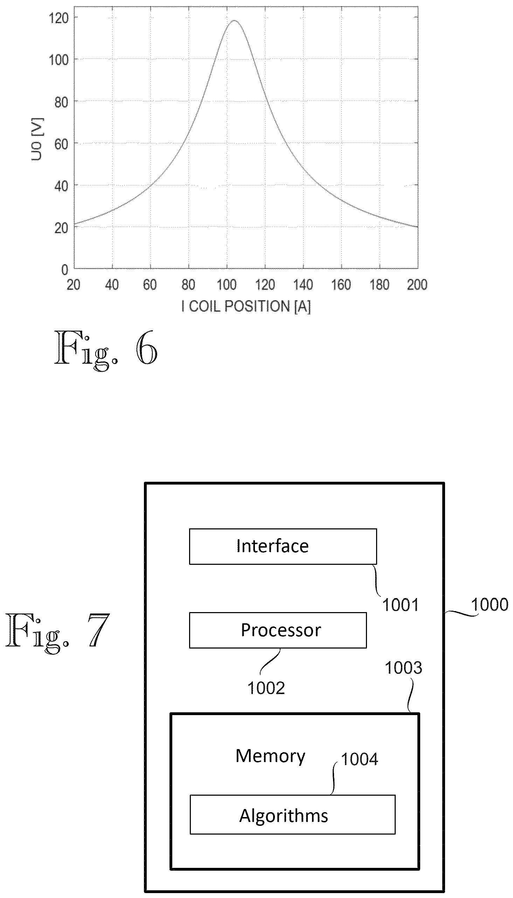

The coil position values ($I_{pos}$) correspond to the coil tuning range of the adjustable coil in amperes.
An example of a resonance curve is shown in Figure 6.
According to an embodiment, after step 210, or directly after step 200, values of e.g. the frequency references, and/or references for the electric network zero-sequence impedance and/or admittance and/or zero-sequence voltage may be updated.

According to an embodiment, at least steps 110, 120, 140, 150, 160 and 180, and optionally step 170, may be repeated essentially continuously or at predetermined intervals or in response to detecting a change in a configuration of the three-phase electric network, for example. As an example, in step 230 it may be waited for a remaining time of a predetermined tuning interval and/or for a trigger based on the zero-sequence voltage and/or for a trigger based on an active injection response and/or for a trigger based on the detected change in the three-phase electric network zero-sequence system resonant frequency and/or manual trigger before initiating 100 the tuning sequence again.

The first control arrangement 11, the second control arrangement 31, or a combination thereof, and/or any other means for implementing at least part of the functionality according to any one of the embodiments herein may be implemented as one physical unit or as two or more separate physical units that are configured to implement the functionality. Herein the term 'unit' generally refers to a physical or logical entity, such as a physical device or a part thereof or a software routine. Figure 7 is a simplified block diagram illustrating some units for an apparatus (device, equipment) 1000 configured to perform at least some functionality of the first control arrangement 11, the second control arrangement 31, or a combination thereof, or generally any corresponding apparatus. In the illustrated example, the apparatus 1000 comprises one or more interface (IF) entities 1001, such as one or more user interfaces and/or data interfaces, and one or more processing entities 1002 connected to various interface entities 1001 and to one or more memories 1003. The one or more interface entities 1001 may be entities for receiving and transmitting information, such as communication interfaces comprising hardware and/or software for realising communication connectivity according to one or more communication protocols, or for realising data, e.g. measuring data, storing and fetching, and/or for providing user interaction via one or more user interfaces. A processing entity 1002 is capable to perform calculations and configured to implement at least part of functionalities/operations described above, with corresponding algorithms 1004 stored in the memory 1003. The processing entity 1002 may include one or more processors, controllers, control units, micro-controllers, etc. configurable to carry out e.g. embodiments, examples, implementations and/or operations described above. Generally, a processor may be a central processing unit, but the processor entity 1002 may be an additional operation processor or a multicore processor or a microprocessor, for instance. A memory 1003 may be usable for storing a computer program code required for one or more functionalities/operations described above, that is, the algorithms 1004 for implementing the functionality/operations described above. The memory 1003 may also be usable for storing, at least temporarily, other possible information required for one or more functionalities/operations described above. The memory 1003 may comprise a data buffer that may, at least temporarily, store for example measurement data and/or information received as a user input. The apparatus comprising the means for providing any embodiment described herein may be implemented at least partly by means by such apparatus 1000 as exemplified in Figure 7.

Generally, first control arrangement 11, the second control arrangement 31, or a combination thereof, and/or any other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

The various embodiments described herein can be implemented at least partly in existing system elements, such as various arc suppression device(s) or similar device(s), and/or by using separate dedicated elements or devices in a centralized or distributed manner. Present arc suppression devices for electric networks may comprise processors and memory that may be utilized in the functions according to the various embodiments described herein. Generally, many electric devices, such as electric power systems, and components thereof, such as intelligent electronic devices, may comprise processors and memory that may also be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 7 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

## Claims

1. A method for controlling an arc suppression device of a three-phase electric network, the arc suppression device having an adjustable admittance connected between a neutral point of the three-phase electric network and earth, the method comprising:

   a) determining a resonant frequency of a zero-sequence system of the three-phase electric network;
   b) determining at least two frequencies for a current injection on the basis of the determined resonant frequency;
   c) performing a current injection into the neutral point of the three-phase electric network by using the determined at least two frequencies;
   d) determining a value of at least one parameter related to the three-phase electric network on the basis of the current injection; and
   e) using the determined value of the at least one parameter for adjusting the admittance of the arc suppression device.

2. A method as claimed in claim 1, wherein the determining of the resonant frequency of the zero-sequence system of the three-phase electric network comprises:

   sequentially injecting current signals of varying frequency or frequencies into the neutral point of the three-phase electric network;
   monitoring a response in the three-phase electric network to the sequential injection of the current signals; and determining the resonant frequency of the zero-sequence system of the three-phase electric network on the basis of the monitored response in the three-phase electric network to the sequential injection of the current signals.

3. A method as claimed in claim 2, wherein the current signals are multifrequency current signals each multifrequency current signal comprising at least two different frequencies.

4. A method as claimed in claim 2 or 3, wherein the sequential injection of the current signals is performed as a frequency sweep, wherein the frequency or frequencies of the sequentially injected current signals are varied between a predetermined minimum frequency and a predetermined maximum frequency.

5. A method as claimed in claim 4, wherein the frequency or frequencies of the sequentially injected current signals are varied between the predetermined minimum frequency and the predetermined maximum frequency in an increasing manner starting from the predetermined minimum frequency or in a decreasing manner starting from the predetermined maximum frequency.

6. A method as claimed in claim 5, wherein the frequency or frequencies of the sequentially injected current signals are varied in a continuous manner or in a discrete manner.

7. A method as claimed in any one of claims 1 to 6, wherein the determining of the at least two frequencies for the current injection on the basis of the determined resonant frequency comprises selecting a first frequency $f_1$ and at least one second frequency $f_2$ according to any one of the following alternatives:

$$f_1 = f_{res}, f_2 = f_{res} + x,$$

$$f_1 = f_{res} + y, f_2 = f_{res} + z,$$

or

$$f_1 = f_{res} \cdot a, f_2 = f_{res} \cdot b,$$

where:

$f_{res}$ is the determined resonant frequency,
$x, y$ and $z$ are predetermined and/or dynamically selected variables, and
$a$ and $b$ are predetermined and/or dynamically selected coefficients.

8. A method as claimed in any one of claims 1 to 7, wherein the at least one parameter related to the three-phase electric network comprises one or more of the following parameters: a total zero-sequence resistance of the three-phase electric network, a total zero-sequence inductance of the three-phase electric network, a total zero-sequence capacitance of the three-phase electric network.

9. A method as claimed in any one of claims 1 to 8, wherein steps a) to e) are repeated essentially continuously or at predetermined intervals or in response to detecting a change in a configuration of the three-phase electric network.

10. An apparatus for controlling an arc suppression device of a three-phase electric network, the arc suppression device having an adjustable admittance connected between a neutral point of the three-phase electric network and earth, the apparatus comprising:

means configured to determine a resonant frequency of a zero-sequence system of the three-phase electric network;
means configured to determine at least two frequencies for a current injection on the basis of the determined resonant frequency;
means configured to perform a current injection into the neutral point of the three-phase electric network by using the determined at least two frequencies;
means configured to determine a value of at least one parameter related to the three-phase electric network on the basis of the current injection; and
means configured to use the determined value of the at least one parameter for adjusting the admittance of the arc suppression device.

11. An apparatus as claimed in claim 10, wherein the means configured to determine the resonant frequency of the zero-sequence system of the three-phase electric network are configured to:

sequentially inject current signals of varying frequency or frequencies into the neutral point of the three-phase electric network;
monitor a response in the three-phase electric network to the sequential injection of the current signals; and
determine the resonant frequency of the zero-sequence system of the three-phase electric network on the basis of the monitored response in the three-phase electric network to the sequential injection of the current signals.

12. An apparatus as claimed in claim 11, wherein the current signals are multifrequency current signals each multi-frequency current signal comprising at least two different frequencies.

13. An apparatus as claimed in claim 11 or 12, wherein the means configured to determine the resonant frequency of the zero-sequence system of the three-phase electric network are configured to perform the sequential injection of the current signals as a frequency sweep, wherein the frequency or frequencies of the sequentially injected current signals are varied between a predetermined minimum frequency and a predetermined maximum frequency.

14. An apparatus as claimed in claim 13, wherein the frequency or frequencies of the sequentially injected current signals are varied between the predetermined minimum frequency and the predetermined maximum frequency in an increasing manner starting from the predetermined minimum frequency or in a decreasing manner starting from the predetermined maximum frequency.

15. An apparatus as claimed in claim 14, wherein the frequency or frequencies of the sequentially injected current signals are varied in a continuous manner or in a discrete manner.

16. An apparatus as claimed in any one of claims 10 to 15, wherein the means configured to determine the at least two frequencies for the current injection on the basis of the determined resonant frequency are configured to select a first frequency $f_1$ and at least one second frequency $f_2$ according to any one of the following alternatives:

$$f_1 = f_{res}, f_2 = f_{res} + x,$$

$$f_1 = f_{res} + y, f_2 = f_{res} + z,$$

or

$$f_1 = f_{res} \cdot a, f_2 = f_{res} \cdot b,$$

where:

$f_{res}$ is the determined resonant frequency,
$x, y$ and $z$ are predetermined and/or dynamically selected variables, and
$a$ and $b$ are predetermined and/or dynamically selected coefficients.

17. An apparatus as claimed in any one of claims 10 to 16, wherein the at least one parameter related to the three-phase electric network comprises one or more of the following parameters: a total zero-sequence resistance of the three-phase electric network, a total zero-sequence inductance of the three-phase electric network, a total zero-sequence capacitance of the three-phase electric network.

Fig. 1

Fig. 2

EP 4 749 862 A1

Deviation from the resonant frequency [Hz]

a)

Deviation from the resonant frequency [Hz]

b)

Fig. 3

Fig. 4

**1. Zero-sequence voltage reponse to constant current injection**

f$_{res}$
Frequency [Hz]

**2. Injection current needed to achieve constant voltage response**

f$_{res}$
Frequency [Hz]

**3. Total zero-sequence impedance**

f$_{res}$
Frequency [Hz]

**4. Total zero-sequence admittance**

f$_{res}$
Frequency [Hz]

Fig. 5

Fig. 6

Fig. 7

| | Europäisches Patentamt / European Patent Office / Office européen des brevets | **EUROPEAN SEARCH REPORT** | **Application Number** EP 24 21 4682 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Druml G ET AL: "NEW METHOD FOR THE STATE EVALUATION OF THE ZERO-SEQUENCE SYSTEM Gernot DRUML", , 26 August 2005 (2005-08-26), pages 1-7, XP093272827, Retrieved from the Internet: URL:https://services.montefiore.uliege.be/stochastic/pscc05/papers/fp549.pdf [retrieved on 2025-04-20] | 1,2, 4-11, 13-17 | INV. H02H9/08 G01R31/08 |
| Y | * abstract * * 1. Introduction; 3.1 Existing Algorithms; 3.2 New Algorithm; 4. Results and field Tests; 5. Conclusion; figures 2,8,9,19,20 * ----- | 3,12 | |
| Y | DE 103 07 668 B3 (EDC GMBH [DE]) 13 January 2005 (2005-01-13) * the whole document * ----- | 1-16 | |
| Y | EP 1 693 679 B1 (ADAPTIVE REGELSYSTEME GMBH [AT]) 11 June 2014 (2014-06-11) * the whole document * ----- | 1-16 | **TECHNICAL FIELDS SEARCHED (IPC)** H02H G01R |

The present search report has been drawn up for all claims

| Place of search | Date of completion of the search | Examiner |
|---|---|---|
| Munich | 6 May 2025 | Palukova, Mila |

EPO FORM 1503 03.82 (P04C01)

## ANNEX TO THE EUROPEAN SEARCH REPORT
## ON EUROPEAN PATENT APPLICATION NO.

EP 24 21 4682

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| DE 10307668 | B3 | 13-01-2005 | AT | 500031 A2 | 15-10-2005 |
| | | | DE | 10307668 B3 | 13-01-2005 |
| EP 1693679 | B1 | 11-06-2014 | EP | 1693679 A1 | 23-08-2006 |
| | | | EP | 2808688 A1 | 03-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1537371 A
- DE 10307668 B3

- EP 1693679 B1